**Europäisches Patentamt**

**European Patent Office**

**Office européen des brevets**

(19)

(11) Veröffentlichungsnummer : **0 369 139 B1**

(12) # EUROPÄISCHE PATENTSCHRIFT

(45) Veröffentlichungstag der Patentschrift :
**25.11.92 Patentblatt 92/48**

(51) Int. Cl.$^5$ : **G01B 5/03**

(21) Anmeldenummer : **89117801.4**

(22) Anmeldetag : **27.09.89**

(54) **Lageranordnung für eine horizontal bewegbare Pinole einer Koordinaten-Messmaschine.**

(30) Priorität : **29.09.88 DE 3833002**

(43) Veröffentlichungstag der Anmeldung :
**23.05.90 Patentblatt 90/21**

(45) Bekanntmachung des Hinweises auf die
Patenterteilung :
**25.11.92 Patentblatt 92/48**

(84) Benannte Vertragsstaaten :
**CH DE FR GB IT LI**

(56) Entgegenhaltungen :
**DE-A- 3 430 086**
**DE-A- 3 515 685**
**US-A- 3 393 459**

(73) Patentinhaber : **Mauser-Werke Oberndorf GmbH**
**Teckstrasse 11**
**W-7238 Oberndorf (DE)**

(72) Erfinder : **Ross, Günther**
**Zollernweg 18**
**W-7238 Oberndorf (DE)**
Erfinder : **Band, Gerhard**
**Dammstrasse 18**
**W-7238 Oberndorf (DE)**
Erfinder : **Bühner, Richard**
**Im Angel 11**
**W-7242 Dornhan (DE)**

(74) Vertreter : **Hofmann, Gerhard, Dipl.-Ing.**
**Patentassessor et al**
**Stephanstrasse 49**
**W-8500 Nürnberg 30 (DE)**

**Beschreibung**

Die Erfindung betrifft eine Lageranordnung für eine horizontal bewegbare Pinole einer Koordinaten-Meßmaschine nach dem Oberbegriff von Patentanspruch 1.

Aus der DE 34 30 086 A1 ist eine Pinole für Koordinaten-Meßmaschinen bekannt, die einen quadratischen Querschnitt aufweist und durch insgesamt acht Lagerkörper geführt ist. Diese Lagerkörper wirken einerseits auf die um 90° zueinander benachbarten Führungsflächen der Pinole und andererseits direkt auf ein Eck in diagonaler Richtung. Eine solche Pinolenlagerung ist bei einer vertikal in der Z-Richtung bewegbaren Pinole trotz der geforderten Genauigkeit für den Verdrehwinkel bzw. den Rollwinkel von maximal zwei Winkelsekunden mit Erfolg durchführbar. Für eine horizontal, beispielsweise in der X- oder in der Y-Richtung bewegbare Pinole verursacht aber gerade die auf dem Eck aufgesetzte, diagonal wirkende Lagerung Schwierigkeiten, weil die notwendige Prismenführung negativ ist. Die Pinole ist nur schwergängig bewegbar, weil zu der Rollreibung auch eine Gleitreibung hinzukommt und die über Eck gesetzte Lagerung eine präzise Führung über eine relativ große Verfahrstrecke der Pinole wegen der auftretenden Biegemomente nicht erlaubt.

Aus der DE-A-35 15 685 ist eine Pinole für eine Koordinaten-Meßmaschine bekannt, die in vertikaler Richtung bewegbar ist und im wesentlichen rund geformte Lager aufweist. Die Lager sind dabei so angeordnet, daß zwei um 90° über Eck zueinander benachbarte Führungsflächen der Pinole auf zwei Festlagern aufliegen, denen gegenüber je ein unter der Wirkung einer Feder stehendes Lager angeordnet ist. Auf die Besonderheiten einer relativ lang bauenden, horizontal bewegbaren Pinole geht diese Veröffentlichung nicht ein.

Es ist deshalb Aufgabe der Erfindung, eine Lageranordnung der eingangs genannten Art zu schaffen, die einfach im Aufbau ist und eine präzise Führung der Pinole trotz möglicher geringer Durchbiegung erlaubt und sich durch eine große Leichtgängigkeit durch geringe Reibungskräfte auszeichnet.

Erfindungsgemäß wird diese Aufgabe durch die kennzeichnenden Merkmale von Patentanspruch 1 gelöst.

Ausgestaltungen der Erfindung finden sich in den abhängigen Ansprüchen 2 bis 5.

Diese erfindungsgemäße Lageranordnung erlaubt eine kompakte Bauart und eine einfache Justierung der einzelnen Lagerkörper. Dadurch ist eine statisch bestimmte Lagerung möglich. Die gewählten Lagerkörper mit den Kugelumlaufschuhen verursachen eine nur geringe Laufreibung. Die Lageranordnung ist von einer hohen Präzision und gestattet eine Anpassung an die gewählte Pinolenform für den Kragarm. Die Einleitung der Lagerkräfte erfolgt in vorteilhafter Weise gegenüberliegend direkt in die Außenwand der Pinole. Die Kugelumlaufschuhe bzw. die Lagerkörper können sich über einen Bolzen bzw. eine Rolle in Längsrichtung der Pinole anpassen und sind in zwei Richtungen einstellbar.

In der Zeichnung ist ein Beispiel der Erfindung dargestellt. Es zeigen:

Figur 1 die Lageranordnung einer horizontal bewegbaren Pinole in der Draufsicht, teilweise im Schnitt,

Figur 2 einen Schnitt durch die Lageranordnung gemäß der Linie II-II in Figur 1,

Figur 3 einen Schnitt durch die Lageranordnung gemäß der Linie III-III in Figur 1.

In einem Kragarm 1 einer nicht näher dargestellten Koordinaten-Meßmaschine ist in einem eingesetzten Aufnahmegehäuse 2 die horizontal in der X- oder in der Y-Richtung bewegbare Pinole 3 gelagert. An ihrem frei ausfahrbaren Stirnende 4 nimmt die Pinole 3 einen Taststift 5 zentral auf. Die Pinole 3 besitzt einen quadratischen Querschnitt mit den jeweils über Eck um 90° zueinander benachbart angeordneten Führungsflächen 6. Diese Führungsflächen 6 erstrecken sich parallel zu der Längsachse 7 über die Pinole 3.

An den vier Ecken der quadratischen Pinole 3 sind nun in einer Querschnittsebene insgesamt vier kompakte Lagerkörper 8 angeordnet, die mit insgesamt acht Kugelumlaufschuhen 9 ausgerüstet sind, welche über Eck jeweils um 90° zueinander benachbart sind und mit den Führungsflächen 6 der Pinole 3 zusammenwirken.

Bei der Lageranordnung nach der vorliegenden Erfindung sind alle Lagerkörper 8 in bezug auf die Führungsflächen 6 der Pinole 3 einstellbar. Jeweils zwei in einer Ebene nebeneinanderliegende Lager 11 der Lagerkörper 8 sind als sogenannte Festlager ausgebildet, denen gegenüberliegend jeweils unter der Wirkung einer Feder 10 stehende einstellbare Lager 12 der Lagerkörper 8 angeordnet sind. Dies bedeutet, daß über Eck betrachtet vier in Reihe angeordnete Festlager 11 vorgesehen sind, denen einstellbare, gefederte Loslager 12 gegenüberliegen.

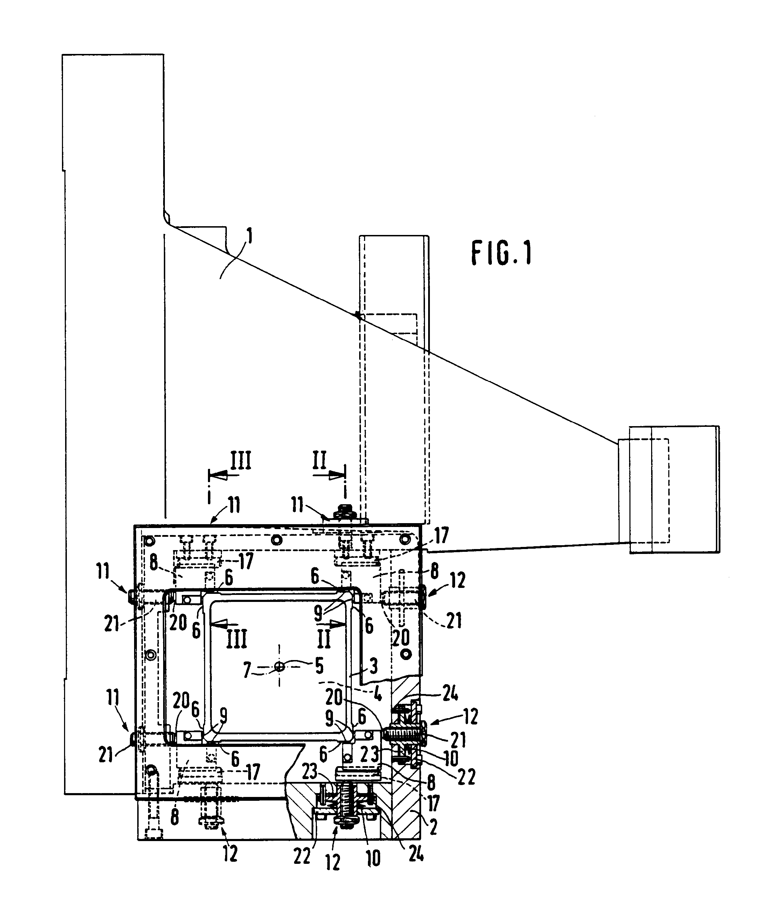

Insbesondere bei relativ lang bauenden Pinolen und einem dadurch möglichen langen Verfahrweg sind in beiden Endbereichen des Aufnahmekörpers der Pinole 3 jeweils auf einer Querschnittsebene Lagerkörper 8 in der Art nach Figur 1 eingesetzt. Dies bedeutet, daß in einem solchen Fall insgesamt acht Lagerkörper eingebaut sind.

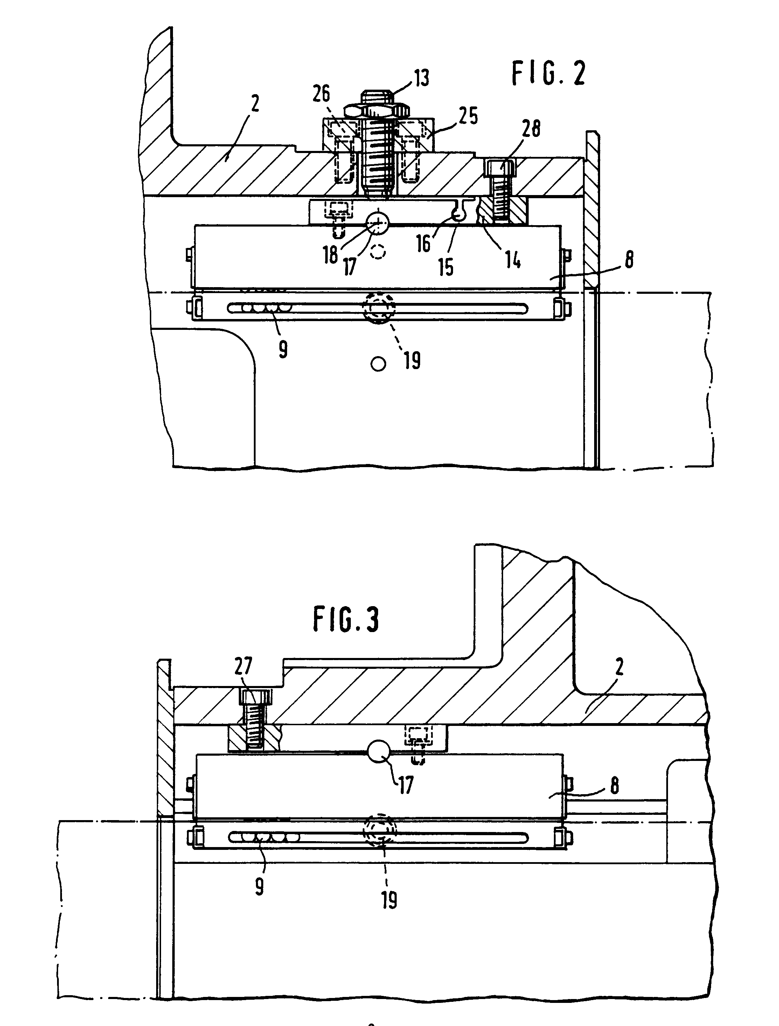

Wie insbesondere die Schnittdarstellungen der Figuren 2 und 3 verdeutlichen, erfolgt die Einstellbarkeit der Lager 11 und 12 der Lagerkörper 8 über eine Einstellschraube 13, die im Falle der Festlager 11 auf eine einseitig eingespannte Zunge 14 wirkt und über die Zunge 14 auf den Lagerkörper 8 steht. Die Zunge 14 ist über den kleinen Steg 15 aufgrund der Ausnehmung 16 schwenkbar. Zwischen der Zunge 14 und dem Lagerkörper 8 in direkter Linie der Einstellschraube 13 befindet sich ein Bolzen oder eine Rolle 17, die ein Schwenken des Lagerkörpers über den Drehpunkt 18 erlaubt. Dabei ist der Bolzen 17 ausschließlich in der Biegeachse der Pinole 3 vorgesehen. Dadurch ist es möglich, daß auch bei ausgefahrener Pinole 3 und der dadurch bedingten Durchbiegung eine einwandfreie Lagerung durch Anpassen der Lagerkörper 8 an die Führungsflächen 6 der Pinole 3 gewährleistet wird.

Die um 90° zu der Biegeachse der Pinole 3 versetzten Lager 11, 12 weisen jeweils eine Kugelpfanne 19 auf, in die das kugelige Stirnende 20 einer Einstellschraube 21 lagernd eingreift. Dadurch wird über die Einstellschraube 21 eine Flächenberührung mit dem Lagerkörper 8 hervorgerufen.

Die jeweils direkt gegenüber den Festlagern 11 angeordneten Loslager 12 besitzen zwischen zwei Scheiben 22 und 23 eingesetzte Tellerfedern 10. Die Scheiben 22 und 23 sind zueinander parallel ausgerichtet. Dabei ist die Scheibe 23 zusätzlich axial bewegbar und durch Stifte 24 in der Axialbewegung geführt.

Die Einstellschrauben 13 und 21 können von unterschiedlicher Bauart sein. So zeigt Figur 2 eine Einstellschraube 13, die als Bolzen mit aufgeschraubter Gewindemutter ausgebildet ist und über eine Gewindescheibe 25, welche durch weitere Schrauben 26 am Aufnahmekörper festgehalten ist, axial in Richtung auf die Lagerkörper 8 beweglich ist.

Gemäß Ausbildung nach Figur 3 kann auch eine Zylinderkopfschraube 27 als Einstellschraube eingesetzt sein. Die einseitige Halterung der Zunge 14 geschieht im Regelfall ebenfalls durch eine weitere Zylinderschraube 28.

**Patentansprüche**

1. Lageranordnung für eine horizontal bewegbare Pinole (3) einer Koordinaten-Meßmaschine, bei welcher die Pinole (3) einen rechteckförmigen Querschnitt besitzt und an ihrem freien Ende einen Meßtaster (5) aufnimmt, dadurch gekennzeichnet, daß in einer Querschnittsebene der Pinole (3) jeweils an den um 90° über Eck zueinander benachbarten Führungsflächen (6) der Pinole (3) vier Lagerkörper (8) angeordnet sind, welche über je zwei (11,12) in der Längsachse (7) der Pinole (3) ausgerichtet und in Bezug auf die Führungsflächen (6) einstellbar sind, wobei über Eck betrachtet vier in Reihe angeordnete Lager als Festlager (11) vorgesehen sind, denen einstellbare, gefederte Lager als Loslager (12) gegenüberliegen, und daß in der Biegeachse der Pinole (3) zwischen dem Lagerkörper (8) und der Gehäusewand des Aufnahmekörpers (2) mindestens eine einseitig eingespannte Zunge (14) eingesetzt ist und die Lager (11,12) über mittig aufgesetzte Bolzen (17) begrenzt schwenkbar sind, während gegen die dazu um 90° versetzten Lager (11,12) eine Einstellschraube (21) mit einem kugeligen Stirnende (20) in einer Kugelpfanne (19) des Lagerkörpers (8) wirkt.

2. Lageranordnung nach Anspruch 1, dadurch gekennzeichnet, daß eine Einstellschraube (13) über die Zunge (14) senkrecht auf die Achse des Bolzens (17) und den Lagerkörper (8) wirkt.

3. Lageranordnung nach Anspruch 1, dadurch gekennzeichnet, daß die Federn (10) als Tellerfedern ausgebildet sind, die zwischen zwei durch die Einstellschraube (21) axial-geführt bewegbare Scheiben (22, 23) eingesetzt sind.

4. Lageranordnung nach Anspruch 1, dadurch gekennzeichnet, daß die Lagerkörper (8) jeweils in den beiden Endbereichen des Aufnahmekörpers (2) der Pinole (3) angeordnet sind.

5. Lageranordnung nach einem der Ansprüche 1 bis 4, dadurch gekennzeichnet, daß die Lagerkörper (8) jeweils zu 90° über Eck angeordnete Kugelumlaufschuhe (9) aufweisen.

**Claims**

1. Bearing arrangement for a horizontally movable sleeve (3) of a coordinate measuring machine, in which the sleeve (3) has a rectangular cross-section and receives at its free end a measurement probe (4), characterized in that there are arranged in a cross-sectional plane of the sleeve (3), in each case on guide surfaces (6) of the sleeve (3), adjacent to one another diagonally at 90°, four bearing bodies (8) which are each aligned along the longitudinal axis (7) of the sleeve (3) by way of two bearings (11, 12) and are adjustable with respect to the guide surfaces (6), four bearings arranged in a row, as seen diagonally, being provided as fixed bearings (11), opposite which are adjustable spring-loaded bearings as free bearings (12), and in that at least one tongue (14) tensioned on one side is inserted, along the axis of flexion of the sleeve (3), between the bearing body (8) and the housing wall of the receiving body (2), and the bearings (11, 12) are pivotal to a limited extent by way of centrally placed pins (17), while an adjustment screw (21) with a spherical end face (20) acts on the bearings (11, 12), offset therefrom by 90°, in a ball socket (19) of the bearing body (8).

2. Bearing arrangement according to Claim 1, characterized in that an adjustment screw (13) acts by way of the tongue (14) perpendicularly on the axis of the pin (17) and on the bearing body (8).

3. Bearing arrangement according to Claim 1, characterized in that the springs (10) are constructed as disc springs which are placed between two plates (22, 23) which are movable in axially guided manner by the adjustment screw (21).

4. Bearing arrangement according to Claim 1, characterized in that the bearing bodies (8) are each arranged in the two end regions of the receiving body (2) of the sleeve (3).

5. Bearing arrangement according to one of Claims 1 to 4, characterized in that the bearing bodies (8) each have ball shoes (9) arranged diagonally at 90°.

**Revendications**

1. Dispositif à paliers pour un fourreau (3) déplaçable horizontalement d'une machine de mesure de coordonnées, dans laquelle le fourreau (3) présente une section transversale rectangulaire et loge à son extrémité libre un palpeur de mesure (5), caractérisé en ce que dans un plan de section transversale du fourreau (3) il est prévu, sur les surfaces de guidage (6) du fourreau (3), voisines les unes des autres de 90° dans les angles, quatre corps de palier (8) qui sont orientés, par deux paliers (11, 12) chacun, dans l'axe longitudinal (7) du fourreau (3) et qui sont réglables par rapport aux surfaces de guidage (6), quatre paliers disposés en rangs, vus dans l'angle, étant prévus comme paliers fixes (11) auxquels font face des paliers réglables, élastiques, constituant des paliers libres (12) et en ce que dans l'axe de flexion du fourreau (3), une languette (14) au moins est serrée d'un côté, entre le corps de palier (8) et la paroi du boîtier du corps de logement (2) et en ce que les paliers (11, 12) peuvent pivoter, de manière limitée, par des boulons (17), placés au milieu, tandis qu'une vis de réglage (21) agit contre les paliers (11, 12), décalés de 90°, avec une extrémité frontale (20) sphérique dans un coussinet sphérique (19) du corps de palier (8).

2. Dispositif à paliers selon la revendication 1, caractérisé en ce qu'une vis de réglage (13) agit, par la languette (14), perpendiculairement à l'axe du boulon (17) et au corps de palier (8).

3. Dispositif à paliers selon la revendication 1, caractérisé en ce que les ressorts (10) sont des ressorts à disque qui sont placés entre deux disques (22, 23) déplaçables au moyen de la vis de réglage (21), de façon guidée axialement.

4. Dispositif à paliers selon la revendication 1, caractérisé en ce que les corps de palier (8) sont placés chacun dans les deux zones terminales du corps de logement (2) du fourreau (3).

5. Dispositif à paliers selon l'une des revendications 1 à 4, caractérisé en ce que les corps de palier (8) présentent chacun des coussinets à circulation de billes (9).

FIG.1

FIG. 2

FIG. 3